# EUROPÄISCHE PATENTANMELDUNG

(11) **EP 1 160 103 A2**
(43) Veröffentlichungstag der Anmeldung: **05.12.2001**
(21) Anmeldenummer: 01109845.6
(22) Anmeldetag: 23.04.2001
(51) Int. Cl.: B60C 27/10

(54) **Gleitschutzvorrichtung für Luftreifen aufweisende Kraftfahrzeugräder**

(30) Priorität: 23.05.2000 DE 8992000; 04.07.2000 AT 11422000; 12.10.2000 AT 17332000
(71) Anmelder: Kahlbacher, Anton, 3363 Amstetten-Neufurth (AT)
(72) Erfinder: Kahlbacher, Anton, 3363 Amstetten-Neufurth (AT)
(74) Vertreter: Hefel, Herbert, Dipl.-Ing.

(57) **Zusammenfassung**

Eine Gleitschutzvorrichtung für Luftreifen aufweisende Kraftfahrzeugräder weist eine im montierten Zustand neben der Radfelge sich befindende Halterung (3) auf, die zumindest zwei winkelig zueinander stehende Arme (1, 2) umfaßt, deren freie Enden mit über dem Reifenumfang angeordneten Gleitschutzmitteln (5) in Verbindung stehen und die über eine Kuppeleinrichtung am Rad befestigbar sind. Die Kuppeleinrichtung umfaßt ein an mindestens zwei Radmuttern (8) bzw. Radschrauben befestigtes Adapterteil (55), an dem ein Befestigungssteg (18) angeordnet ist, der zumindest eine Öffnung (22) aufweist, die vorzugsweise in einem parallel zur vertikalen Felgenmittelebene (56) liegenden Bereich des Befestigungssteges (18) angeordnet ist, wobei ein mit den Armen (1, 2) der Halterung verbundenes Kuppelteil (23, 23') in die Öffnung (22) im Befestigungssteg (18) einführbar und in dieser festlegbar ist (Fig. 16).

## Beschreibung

Die Erfindung betrifft eine Gleitschutzvorrichtung für Luftreifen aufweisende Kraftfahrzeugräder, welche eine im montierten Zustand neben der Radfelge sich befindende Halterung aufweist, die zumindest zwei winkelig zueinander stehende Arme umfaßt, deren freie Enden mit über dem Reifenumfang angeordneten Gleitschutzmitteln in Verbindung stehen und die über eine Kuppeleinrichtung am Rad befestigbar sind.

Eine Gleitschutzvorrichtung dieser Art ist aus der AT-PS 385 243 bekannt. Diese weist ebenfalls eine Halterung auf, welche sich im montierten Zustand neben der Radaußenseite befindet und zwei winkelig zueinander stehende Arme umfaßt, deren freie Enden mit über dem Reifenumfang angeordneten Gleitschutzmitteln in Form von Ketten in Verbindung stehen. Die Halterung ist über eine Kuppeleinrichtung am Rad gehaltert und gegenüber diesem verspannt. Bei dieser Kuppeleinrichtung sind Gummiriemen vorgesehen, die in die Felge des Rades eingehakt werden. Nachteilig daran ist, daß nicht jede Felge für das Einhaken von Gummiriemen geeignet ist und daß diese Befestigung am Rad weiters wenig zuverlässig ist.

Eine Gleitschutzvorrichtung der eingangs genannten Art, bei der ein an einer Radmutter befestigbarer Klemmkopf zur Verbindung der Kuppeleinrichtung mit dem Rad vorgesehen ist, ist weiters durch öffentliche Vorbenutzung bekannt. Bei dieser Gleitschutzvorrichtung steht der Klemmkopf mit den Armen der Halterung über einen Gummistrang in Verbindung, dessen freie Enden in Buchsen gelagert sind. Eine dieser Buchsen ist an den Armen der Halterung befestigt und die andere steht über ein Verbindungsstück mit dem Klemmkopf in Verbindung. Der Gummistrang übt einerseits eine gegen das Rad gerichtete Spannkraft auf die Halterung aus und nimmt weiters Verschiebungen zwischen der Halterung und dem Klemmkopf während der Umdrehung des Rades auf, welche durch eine unvollständige Zentrierung der montierten Halterung sowie insbesondere durch die Walkbewegung der Luftreifen beim Abrollen des Rades bewirkt werden. Nachteilig an dieser Einrichtung ist die Verbindungsstelle zwischen dem Gummistrang und den mit dieser befestigten Haltebuchsen, die naturgemäß eine Schwachstelle darstellt. Durch die bei der Verwendung der Gleitschutzvorrichtung auftretenden Kräfte kann es im Laufe der Zeit zu einer Lockerung und einem Ausreißen des Gummistrangs kommen. Weiters kommt es durch unzentrisch wirkende Kräfte nach einer relativ kurzen Betriebszeit zu einem Lösen des Klemmkopfes.

Ein Klemmkopf zur Befestigung einer Gleitschutzvorrichtung an einer Radschraube ist weiters beispielsweise auch aus der DE 39 10 669 A1 bekannt.

Aufgabe der Erfindung ist es, eine Gleitschutzvorrichtung der eingangs genannten Art bereitzustellen, welche einfach montierbar ist, eine zuverlässige Befestigung der Gleitschutzvorrichtung am Rad ermöglicht, eine lange Lebensdauer aufweist und in einfacher Weise an unterschiedliche Felgentypen anpaßbar ist. Erfindungsgemäß gelingt dies dadurch, daß die Kuppeleinrichtung ein an mindestens zwei Radmuttern bzw. Radschrauben befestigtes Adapterteil umfaßt, an dem ein Befestigungssteg angeordnet ist, der zumindest eine Öffnung aufweist, die vorzugsweise in einem parallel zur vertikalen Felgenmittelebene liegenden Bereich des Befestigungssteges angeordnet ist, wobei ein mit den Armen der Halterung verbundenes Kuppelteil in die Öffnung im Befestigungssteg einführbar und in dieser festlegbar ist.

Das Adapterteil der erfindungsgemäßen Gleitschutzvorrichtung ermöglicht eine sichere Befestigung der Kuppeleinrichtung an den Radmuttern bzw. Radschrauben. Durch die Befestigung an zwei Radmuttern kann das Adapterteil den Felgenmittelpunkt überspannen, wodurch eine zum Felgenmittelpunkt symmetrische Befestigung der Gleitschutzvorrichtung am Adapterteil möglich ist.

In einer ersten Ausführungsvariante der Erfindung ist das Adapterteil an den jeweiligen Felgentyp angepaßt, so daß die eine oder mehreren Öffnungen im Befestigungssteg zum Einführen der entsprechenden Kuppelteile jeweils im Bezug auf die Mantelfläche des Rades an der gleichen Position liegen. Hierdurch ist bei der Verwendung der Gleitschutzvorrichtung mit unterschiedlichen Felgentypen nur das Adapterteil und der Befestigungssteg jeweils speziell angepaßt zu gestalten, während die übrigen Teile der Gleitschutzvorrichtung unverändert bleiben können. Dies führt zu einer wesentlichen Kosteneinsparung bei der Produktion.

Das Adapterteil wird gemäß dieser ersten Variante der Erfindung bevorzugterweise von einer Basisscheibe gebildet, die im wesentlichen parallel zum unter der Basisscheibe liegenden Bereich der Oberfläche der Radfelge bzw. zur vertikalen Felgenmittelebene ausgerichtet ist und an der der Befestigungssteg angeordnet ist. Die Basisscheibe und der Befestigungssteg können hierbei von zwei starr miteinander verbundenen Teilen gebildet werden. Günstigerweise ist dabei vorgesehen, daß der Befestigungssteg brückenartig ausgebildet ist, wobei er von zwei mit ihren einen Enden seitlich mit der Basisscheibe starr verbundenen, von der Basisscheibe abstehenden Distanzstegen und einem diese an ihren anderen, von der Basisscheibe abgewandten Enden verbindenden Brückensteg gebildet wird und der Brückensteg zwei symmetrisch zum Felgenmittelpunkt liegende Öffnungen aufweist. Durch eine zum Felgenmittelpunkt symmetrische Ausbildung treten keine exzentrischen Kräfte auf, welche zu einem unbeabsichtigten Lösen der Kuppeleinrichtung von der Felge während des Betriebes führen könnten.

In einer zweiten, besonders vorteilhaften Ausführungsform der Erfindung ist ein Adapterteil vorgesehen, welches mit unterschiedlichen Felgentypen verwendbar ist. Hierbei ist zur Anpassung des Adapterteils an die verschiedenen Lochabstände der unterschiedlichen Felgentypen ein Montageloch des Adapterteils, über welches das Adapterteil mittels eines Klemmbackens an einer Radmutter oder Radschraube befestigbar ist, in einem Verstellarm angeordnet. Dieser Verstellarm ist zur Einstellung des Adapterteils auf unterschiedliche Abstände der Felgenmuttern bzw. Felgenschrauben in einer Ebene parallel zur vertikalen Felgenmittelebene verschwenkbar und in unterschiedlichen Schwenkstellungen festlegbar. Günstigerweise weist der Verstellarm hierzu mindestens eine, vorzugsweise mehrere Bohrungen auf, über die er in einer von mehreren Bohrungen in einem Abschnitt des Adapterteils festschraubbar ist.

In einer bevorzugten Ausführungsform der zweiten Ausführungsvariante der Erfindung weist das Adapterteil mindestens ein als Langloch ausgebildetes Montageloch zum Befestigen des Adapterteils an einer Radmutter bzw. Radschraube über einen Klemmkopf auf. Bevorzugterweise sind zwei nebeneinanderliegende, als Langlöcher ausgebildete Montagelöcher vorgesehen, von denen das eine zur Befestigung des Adapterteils an einer 4-Lochfelge und das andere zur Befestigung an einer 5-Lochfelge vorgesehen ist.

Auch bei dieser zweiten Ausführungsvariante der Erfindung wird eine sichere und stabile Befestigung der Schneekette erreicht, wobei exzentrisch wirkende Kräfte minimierbar sind. Insbesondere vorteilhaft ist es dabei, daß die eine Öffnung bzw. die mehreren Öffnungen im Befestigungssteg zur Aufnahme der Kuppelteile symmetrisch zur zentralen Längsachse der Radfelge an der Radfelge festlegbar sind.

Bevorzugterweise umfaßt die Kuppeleinrichtung einen zentralen Bolzen, auf dem die Arme der Halterung der Gleitschutzvorrichtung gelagert sind. In einer besonders bevorzugten Ausführungsform der Erfindung steht dabei dieser zentrale Bolzen jeweils über kugelgelenkartige Verbindungen einerseits mit den Armen, andererseits mit dem mindestens einen Kuppelteil in Verbindung. Durchmesserveränderungen des Reifens aufgrund von dessen Walkbewegung beim Abrollen können dadurch von der Kuppeleinrichtung aufgenommen werden, ohne daß Biegebelastungen auf diese ausgeübt werden. Die Langlebigkeit der erfindungsgemäßen Gleitschutzvorrichtung wird dadurch wesentlich erhöht.

Weiters umfaßt die Kuppeleinrichtung bevorzugterweise ein Zwischenstück, an dem die Kuppelteile befestigt sind und welches über die eine kugelgelenkartige Verbindung mit dem zentralen Bolzen in Verbindung steht. Dieses Zwischenstück weist günstigerweise parallele, in Richtung zur Radfelge verlaufende Arme auf, zwischen denen eine Druckplatte verschiebbar gelagert ist, über die Betätigungsstifte zum Freigeben der Verbindung der Kuppelteile aus der Öffnung im Adapterteil freigebbar sind. Vorteilhafterweise ist diese Druckplatte mit einem in Richtung zur Radfelge sich erstreckenden Zentrierstift starr verbunden, der bei geschlossener Kuppeleinrichtung durch eine zentrale Zentrierbohrung im Befestigungssteg ragt. Dieser Zentrierstift erleichtert einerseits die Montage der Schneekette, indem er die korrekte radiale Position der Kuppelteile zum Einführen der Kuppelteile in die Öffnungen im Befestigungssteg vorgibt, andererseits zentriert er die Halterung der Gleitschutzvorrichtung im montierten Zustand. Er verhindert dadurch zuverlässig das Auftreten von Exzentrizitäten.

Weitere Vorteile und Einzelheiten der Erfindung werden im folgenden anhand der beiliegenden Zeichnung erläutert, welche ein bevorzugtes Ausführungsbeispiel der Erfindung darstellt. In der Zeichnung zeigen:
- Fig. 1: eine Ansicht von innen einer erfindungsgemäßen Gleitschutzvorrichtung ohne die Kuppeleinrichtung zur Verbindung der Arme mit dem Rad;
- Fig. 2: einen Schnitt durch eine auf dem Rad montierte Gleitschutzvorrichtung;
- Fig. 3: eine Ansicht der Kupplungseinrichtung von außen, zum Teil aufgebrochen;
- Fig. 4: einen Schnitt durch die Kupplungseinrichtung entlang der Linie A-A von Fig. 3 in einem im Vergleich zu Fig. 2 vergrößerten Maßstab;
- Fig. 5: eine Ansicht einer Druckplatte der Kuppeleinrichtung;
- Fig. 6: einen schematischen Schnitt durch einen Klemmkopf;
- Fig. 7: einen modifizierten Klemmkopf mit stufenloser Höhenverstellung für Alu-Felgen;
- Fig. 8: einen Teilquerschnitt (analog zu Fig. 1) einer modifizierten Ausführungsform und
- Fig. 9: eine Draufsicht auf den Befestigungssteg gemäß Fig. 7;
- Fig. 10 und Fig. 11: eine Seitenansicht und eine Ansicht von unten eines zentralen Bolzens mit Zentrierstift;
- Fig. 12: eine Draufsicht auf ein Adapterteil gemäß einer zweiten Ausführungsvariante der Erfindung;
- Fig. 13: einen Schnitt entlang der Linie B-B von Fig. 12;
- Fig. 14: eine schematische Darstellung eines Steckstiftes zur Verkürzung des Umfangs der Gleitschutzvorrichtung;
- Fig. 15: den Verstellarm;
- Fig. 16: ein weiteres, besonders bevorzugtes Ausführungsbeispiel der Erfindung;

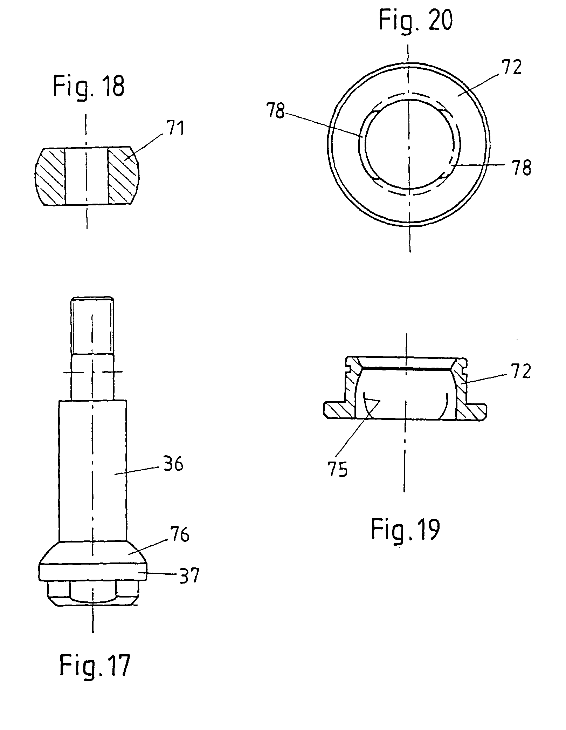

- Fig. 17: den zentralen Bolzen des Ausführungsbeispiels nach Fig. 16 in Seitenansicht;
- Fig. 18: den Kugelkopf im Längsschnitt;
- Fig. 19: das Lagerteil mit der Kugelgelenkpfanne im Längsschnitt und
- Fig. 20: eine Ansicht auf das Lagerteil von Fig. 19 von unten.

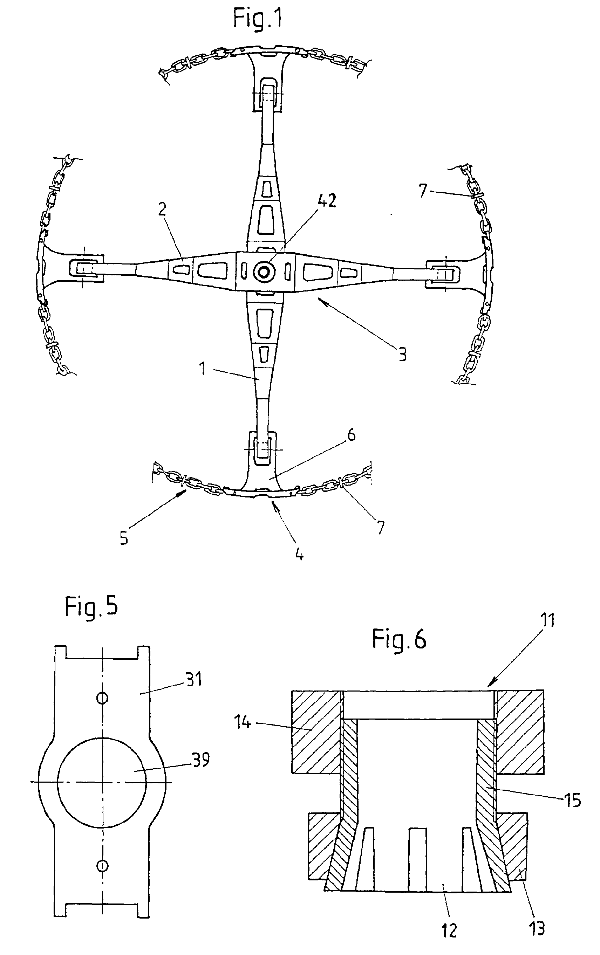

Eine Gleitschutzvorrichtung in Form einer sogenannten selbstanlegenden Schneekette weist, wie aus Fig. 1 ersichtlich, eine im montierten Zustand der Schneekette neben der Radaußenseite liegende Halterung 3 auf, welche sich kreuzende Arme 1, 2 umfaßt. Diese sind um eine zentrale Achse gegeneinander verschwenkbar gelagert, um eine platzsparende Lagerung der Gleitschutzvorrichtung zu ermöglichen. Die freien Enden der Arme 1, 2 stehen über Laschen 4, welche aus flexiblem Kunststoff oder Kautschuk bestehen, mit kettenförmigen, im montierten Zustand über dem Umfang des Autoreifens angeordneten Gleitschutzmitteln 5 in Verbindung (in der Figur 1 nur teilweise dargestellt). Die Laschen 4 sind plattenförmig ausgebildet und über einen Armfortsatz 6 mit den freien Enden der Arme 1, 2 verbunden und um eine Achse verschwenkbar, die parallel zu der von der seitlichen Fläche des Rades gebildeten Ebene liegt. An den Laschen 4 sind jeweils paarweise zwischen diesen verlaufende, als Ketten ausgebildete Gleitschutzmittel 5 befestigt, die über Abstandsteile 7 in einem geeigneten Abstand voneinander gehalten werden.

Derartige Gleitschutzvorrichtungen mit Gleitschutzmitteln 5 und einer Halterung 3 mit sich kreuzenden Armen 1, 2 sind an sich bekannt. Die genaue Ausbildung der Gleitschutzmittel 5 sowie der Arme 1, 2 und der Laschen 4 der Halterung sind für die Erfindung nicht wesentlich. Diese Teile könnten beispielsweise auch in der in der AT-PS 385 243 dargestellten Art ausgebildet sein.

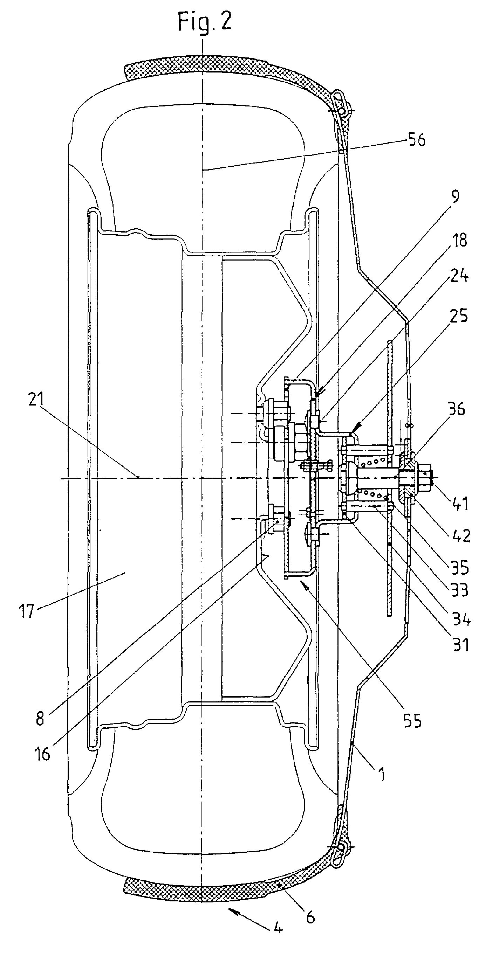

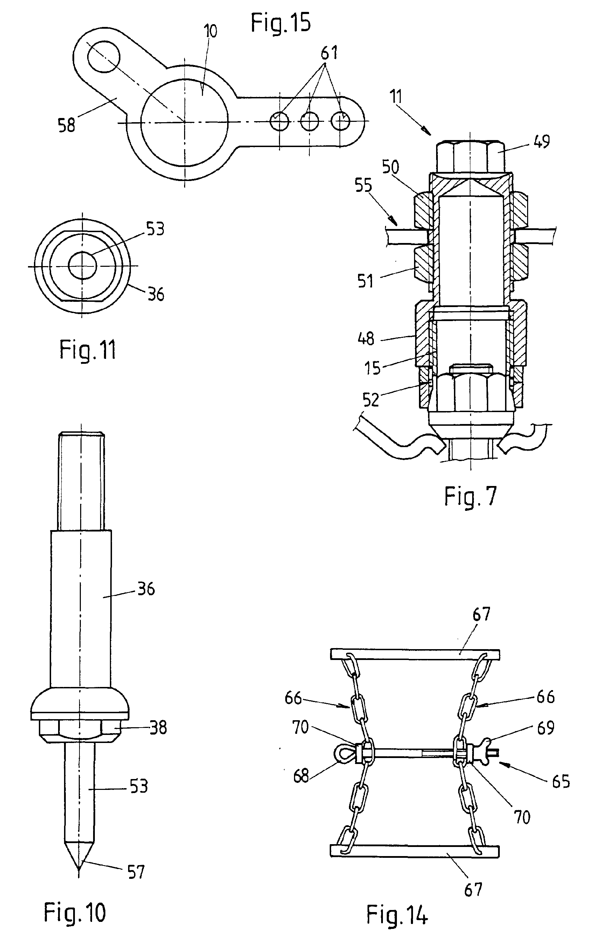

Die Arme 1, 2 sind über eine Kuppeleinrichtung an den Radmuttern 8 befestigt, wie im folgenden zunächst anhand einer ersten Ausführungsvariante der Erfindung, unter Bezugnahme auf die Figuren 1 bis 5, genauer erläutert wird. Eine Basisscheibe 9 eines Adapterteils 55 ist an zwei Radmuttern 8 mittels zwei Klemmköpfen 11 befestigt, welche Montagelöcher 10 im Adapterteil durchsetzen, wobei das Adapterteil den Bereich zwischen den beiden Radmuttern und somit den Felgenmittelpunkt überspannt. Derartige Klemmköpfe sind bekannt, beispielsweise aus der DE 39 10 669 A1. Zur Veranschaulichung ist in Fig. 6 eine mögliche Ausführungsform eines solchen Klemmkopfs schematisch dargestellt. Zur Befestigung an der Radmutter 8 werden die Klemmfortsätze 12 über die Radmutter 8 geschoben. Die Klemmfortsätze 12 sind an einem Gewindestummel 15 mit einem Außengewinde festgelegt, auf welchen eine Spannmutter 14 mit einem Innengewinde aufgeschraubt ist. Zwischen die Spannmutter 14 und einen Klemmring 13 werden die vom Klemmkopf zu haltenden Teile eingebracht, worauf die Spannmutter festgeschraubt wird, so daß die konische Innenfläche des Klemmringes 13 gegen die nach außen gerichteten Klemmfortsätze 12 drückt und die Klemmfortsätze mit der Radmutter 8 verspannt werden. Zur Sicherung des Klemmrings 13 kann auf der der Spannmutter zugewandten Seite ein (in Fig. 5 nicht dargestellter) O-Ring (vgl. O-Ring 52 in Fig. 7) aus einem elastischen Material am Klemmring anliegen, wobei der Klemmring an seiner dem Außengewinde des Gewindestummels zugewandten Seite eine Ausnehmung aufweisen kann, in der der O-Ring zumindest teilweise liegt.

Zur Befestigung der Basisscheibe 9 werden nun zunächst zwei Klemmköpfe 11 auf Radmuttern 8 aufgesteckt, wobei die Spannmuttern 14 von den Gewindestummeln 15 abgeschraubt sind. Die Basisscheibe 9 weist Montagelöcher 10 auf, die in ihrer Anzahl und Anordnung an die Anzahl und Lage der Radmuttern bzw. Radschrauben angepaßt sind. Üblich sind beispielsweise 4-Lochfelgen und 5-Lochfelgen. Mit diesen Montagelöchern 10 wird die Basisscheibe über die Radmuttern 8 bzw. die Gewindestummel 15 der beiden auf die Radmuttern aufgeschobenen Klemmköpfe gestülpt. Anschließend werden die Spannmuttern 14 auf die Gewindestummel aufgeschraubt und gegen die Basisscheibe 9 und den darunterliegenden Klemmring 13 verspannt.

Die Klemmköpfe werden dabei bevorzugterweise nicht an unmittelbar benachbarten Radmuttern angebracht. Die Basisscheibe wird auf diese Weise sicher am Rad befestigt, wobei sie im wesentlichen parallel zur Oberfläche 16 der Radfelge 17 (in ihrem unter der Basisscheibe liegenden Bereich) bzw. zur vertikalen Felgenmittelebene 56 ausgerichtet ist. Grundsätzlich denkbar und möglich wären auch andere Arten der Befestigung der Basisscheibe an den Radmuttern bzw. Radschrauben, beispielsweise über spezielle Radschrauben, die an ihrer Rückseite mit einem Gewindestummel versehen sind.

Ein etwas modifizierter, insbesondere zur Verwendung mit Leichtmetallfelgen geeigneter Klemmkopf ist in Fig. 7 dargestellt. Bei diesem ist auf dem Außengewinde des Gewindestummels 15 eine Spannhülse 48 über ihr Innengewinde aufgeschraubt. Am freien Ende der Spannhülse 48 ist ein Außensechskant 49 angebracht bzw. starr mit der Spannhülse 48 verbunden. Im oberen, nach innen abgestuften Bereich der Spannhülse ist ein Außengewinde vorgesehen, auf welches Muttern 50, 51 aufschraubbar sind. Zwischen diesen Muttern ist das Adapterteil über eines seiner Montagelöcher festklemmbar. Der Durchmesser des Außengewindes im oberen Teil der Spannhülse 48 entspricht dem Durchmesser des Außengewindes des Gewindestummels 15. Bei der Verwendung mit einer Leichtmetallfelge, bei der die Radmuttern bzw. Radschrauben in einer Vertiefung in der Felge angebracht sind, wird die Spannhülse verwendet, andernfalls kann eine Spannmutter 14 entsprechend Fig. 6 auf das Außengewinde des Gewindestummels 15 aufgeschraubt werden, wobei das Adapterteil über eines seiner Montagelöcher unter dieser Spannmutter festgeklemmt ist.

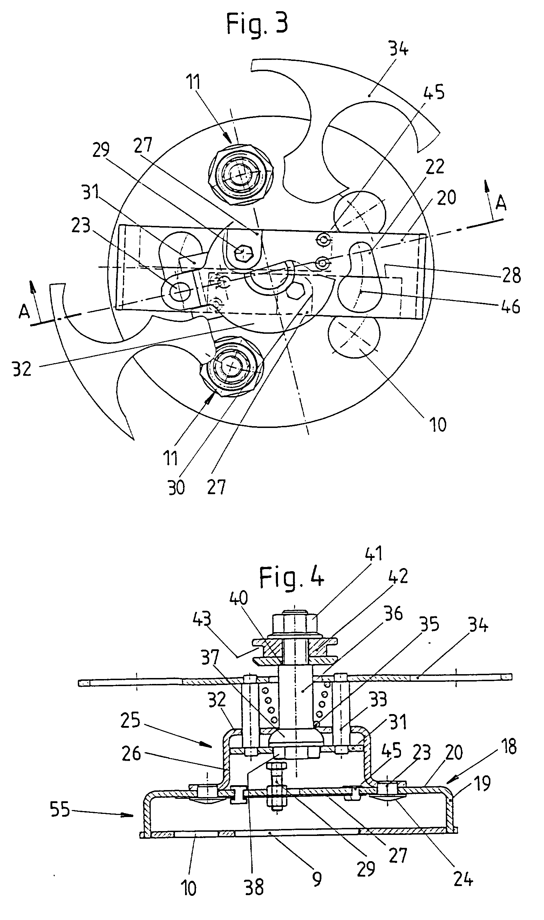

An der Basisscheibe 9 des Adapterteils 55 ist ein brückenartiger Befestigungssteg 18 angebracht. Dieser wird von zwei Distanzstegen 19 gebildet, die mit ihren einen Enden mit der Basisscheibe in seitlichen Bereichen der Basisscheibe starr verbunden sind und von dieser abstehen und die an ihren anderen, von der Basisscheibe abgewandten Enden von einem Brückensteg 20 verbunden werden. Im Brückensteg 20 des Befestigungssteges 18 sind zwei symmetrisch zur zentralen Längsachse 21 der Radfelge 17 liegende Öffnungen 22 vorgesehen. In diesen Öffnungen sind pilzförmige Kuppelteile 23 festlegbar, die an einem Zwischenstück 25 befestigt sind. Das Zwischenstück 25 umfaßt einen scheibenförmigen Abschnitt 32, der parallel zur Basisscheibe 9 ausgerichtet ist, und zwei seitlich von diesem ausgehende Arme 26, die senkrecht zum scheibenförmigen Abschnitt 32 stehen und in Richtung zur Radfelge 17 ausgerichtet sind. Die freien Enden dieser Arme 26 sind nach außen abgekröpft und an diesen Abkröpfungen sind die Kuppelteile 23 angeordnet. Zur Verbindung der Kuppelteile 23 mit dem Befestigungssteg 18 sind die Köpfe 24 der Kuppelteile 23 in einen ersten Bereich der Öffnung einführbar, wobei der erste Bereich der Öffnung eine lichte Weite aufweist, die größer ist als der Durchmesser des Kopfes 24 des Kuppelteils. Durch Verdrehen des Zwischenstücks 25 (in die Richtung entgegen dem Uhrzeigersinn in Fig. 3 gesehen) werden die pilzförmigen Kuppelteile in zweite Bereiche der Öffnungen 22 verschoben, in denen die lichten Weiten der Öffnungen kleiner sind als die Durchmesser der Köpfe 24 der Kuppelteile 23, so daß die Köpfe 24 der Kuppelteile 23 die Ränder der Öffnungen 22 in diesen zweiten Bereichen der Öffnungen 22 hintergreifen. Die Längsmittellinie der jeweiligen Öffnung 22, entlang der die beiden Abschnitte der Öffnung 22 liegen, bilden einen Kreisbogen.

Zur Sicherung der Kuppelteile in der verriegelten Position (wenn sie sich in den zweiten Bereichen der Öffnungen 22 befinden) sind an der der Radfelge 17 zugewandten Rückseite des Brückensteges 20 des Befestigungssteges 18 Blattfedern 27 befestigt. Diese liegen im unbelasteten Zustand am Brückensteg 20 des Befestigungssteges 18 an und überdecken die ersten Bereiche der Öffnungen 22, wobei jeweils ihr einer längsseitiger Rand zwischen dem ersten Bereich und dem zweiten Bereich der Öffnung 22 verläuft. Beim Einführen des Kopfes 24 des Kuppelteils 23 in den ersten Bereich der Öffnung 22 wird somit die jeweilige Blattfeder 27 nach unten in Richtung der Basisscheibe 9 verschoben. Nach der Verschiebung des Kuppelteils 23 in den zweiten Bereich der Öffnung 22 durch Verdrehung des Zwischenstücks 25 schnappt die Blattfeder zurück in ihre am Brückensteg 20 anliegende Position und sichert somit das im zweiten Bereich der Öffnung 22 sich befindende Kuppelteil gegen eine unbeabsichtigte Verschiebung zurück in den ersten Bereich der Öffnung 22. Die Blattfedern 27 sind über Blindniete 45 am Brückensteg 20 befestigt.

Um die Kuppelteile 23 wiederum in die ersten Bereiche der Öffnungen 22 zurückverschieben zu können, sind an den Blattfedern 27 Stifte 29 in Form von Schrauben festgelegt, wobei die Schraube durch eine Bohrung in der Blattfeder 27 ragt und die Blattfeder zwischen zwei auf die Schraube aufgeschraubten Muttern liegt. Im Bereich dieser Stifte 29 sind in den Brückenstegen 20 Ausnehmungen 30 vorgesehen, durch welche die Stifte 29 durch den Brückensteg 20 des Befestigungssteges 18 treten. Mittels dieser Stifte 29 sind die Blattfedern 27 vom Brückensteg 20 des Befestigungssteges 18 in Richtung der Radfelge 17 abhebbar, worauf das jeweilige Kuppelteil 23 in den ersten Bereich der Öffnung 22 verschiebbar ist und durch diesen ersten Bereich der Öffnung aus dem Brückensteg 20 des Befestigungssteges 18 herausziehbar ist.

Zur Betätigung der Stifte 29 ist eine Druckplatte 31 vorgesehen, die in Fig. 6 im Detail dargestellt ist und die entlang den Armen 26 des Zwischenstücks 25 verschiebbar ist. Zur Verschiebung der Druckplatte 31 ist diese an den vorderen Enden von Verbindungsstiften 33 befestigt, die durch Öffnungen im scheibenförmigen Abschnitt 32 des Zwischenstücks 25 treten und deren hintere Enden in einer Betätigungsscheibe 34 festgelegt sind. Von einer Kegeldruckfeder 35 werden der scheibenförmige Abschnitt 32 des Zwischenstücks 25 und die Betätigungsscheibe 34 auf Distanz gehalten. Durch Niederdrücken der Betätigungsscheibe 34 in Richtung der Radfelge 17 wird die Druckplatte 31 gegen die Stifte 29 verschoben, wobei die Blattfedern 27 vom Brückensteg 20 abgehoben werden und die in den zweiten Abschnitten der Öffnungen 22 festgelegten Kuppelteile freigegeben werden. Zum Öffnen der Kuppeleinrichtung wird die niedergedrückte Betätigungsscheibe 34 verdreht (im Uhrzeigersinn in Fig. 3 gesehen), wobei das Zwischenstück 25 ebenfalls verdreht wird und die Kuppelteile 23 von den zweiten Bereichen der Öffnungen in die ersten Bereiche der Öffnungen 22 verschoben werden und durch diese aus den Öffnungen herausgezogen werden können.

Im scheibenförmigen Abschnitt 32 des Zwischenstücks 25 ist eine zentrale Öffnung vorgesehen, durch welche ein zentraler Bolzen 36 tritt. Der Kopf 37 des Bolzens, der einen größeren Durchmesser als diese zentrale Öffnung im scheibenförmigen Abschnitt 32 aufweist, ist dadurch im Zwischenstück 25 festgelegt. Der Kopf 37 des Bolzens weist Schlüsselflächen zum Festziehen der Mutter 41 an einem Zentrierabschnitt 38 auf. Dieser Zentrierabschnitt 38 liegt, falls die Betätigungsscheibe 34 nicht gerade niedergedrückt wird, in einer Öffnung 39 in der Druckplatte 31. Der Bolzen 36 ist dadurch um die Längsachse zentriert. Zwischen einer ringförmigen Schulter 40 des Bolzens 36 und einer auf ein Außengewinde am freien Ende des Bolzens aufgeschraubten Mutter 41 ist eine Lagerscheibe 42 vorgesehen. Diese Lagerscheibe 42 umfaßt eine Ringnut 43, in der die beiden Arme 1, 2 drehbar gelagert sind.

Zum Anlegen der Gleitschutzvorrichtung werden zwei der Laschen 4 über die Oberseite des Mantels 44 des Rades gelegt und die beiden gegenüberliegenden Laschen 4 soweit wie möglich unter den Radmantel, seitlich von dessen Auflagefläche auf dem Untergrund, eingeschoben. In der Folge wird das Fahrzeug etwas verfahren, wobei etwa eine halbe Umdrehung des Rades durchgeführt wird. Die ganz über den Mantel 44 geschobenen Laschen befinden sich nun auf der Unterseite des Rades und die anderen beiden Laschen können vollständig über den Mantel des Rades geschoben werden. In der Folge werden die Kuppelteile 23 in den Öffnungen 22 im Befestigungssteg 18 festgelegt. Dazu wird die Betätigungsscheibe 34 gefaßt, die Kuppelteile in die ersten Bereiche der Öffnungen 22 eingeführt und die Betätigungsscheibe 34 gegen den Uhrzeigersinn verdreht, bis die Kuppelteile in den zweiten Bereichen der Öffnungen 22 liegen und durch die Blattfedern 27 gesichert sind. Zum Abnehmen der Gleitschutzvorrichtung wird die Betätigungsscheibe 34 nach innen gedrückt und im Uhrzeigersinn verdreht, bis die Kuppelteile 23 durch die ersten Bereiche der Öffnungen 22 herausgezogen werden können, und anschließend die Laschen 4 vom Mantel 44 des Rades abgezogen, wobei das Fahrzeug wiederum etwas verfahren wird.

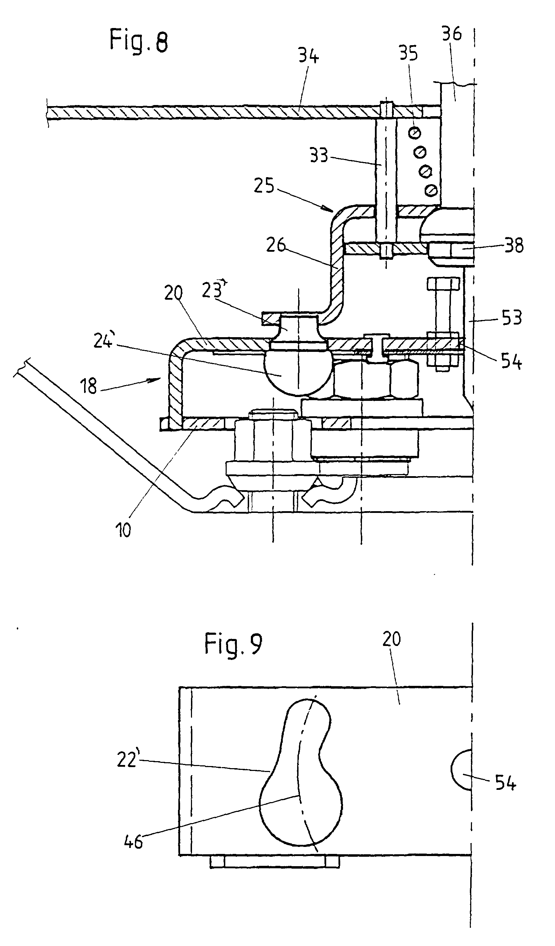

Eine etwas modifizierte Ausführungsform der Kuppeleinrichtung ist in Fig. 8 und 9 dargestellt. Hier ist der Kopf 24' des Kuppelteils 23' kugelförmig ausgebildet, wodurch keine Verkantung beim Verschieben in der Öffnung 22 im Befestigungssteg 18 auftritt. Zum Einkuppeln wird der Kopf 24' des Kuppelteils 23' durch den ersten Bereich der Öffnung 22 (in welchem diese ihre größte lichte Weite aufweist) eingeführt, bis der Arm 26 am Brückensteg 20 anliegt. Durch Verdrehung des Zwischenstücks 25 gelangt das Kuppelteil in den zweiten Bereich der Öffnung 22, in der die lichte Weite kleiner ist als der Durchmesser des Kopfes 24'. Zur Sicherung der Kuppelteile in den Öffnungen sind wiederum Blattfedern am Brückensteg in der beschriebenen Weise vorhanden (nicht dargestellt in Fig. 9).

In den Figuren 8 und 9 sowie 10 und 11 ist weiters eine besonders bevorzugte Ausbildungsform des zentralen Bolzens 36 dargestellt. Dieser weist hier einen in Richtung zur Radfelge sich erstreckenden Zentrierstift 53 auf, der bei geschlossener Kuppeleinrichtung durch eine zentrale Zentrieröffnung 54 im Befestigungssteg 18 ragt. Durch diesen Zentrierstift wird das Schließen der Kuppeleinrichtung erleichtert. Zum Schließen der Kuppeleinrichtung wird die Spitze 57 des Zentrierstifts 53 in die Zentrieröffnung 54 eingeführt und dadurch nehmen die Kuppelteile 23, 23' bereits ihre korrekte radiale Lage ein, um in die Öffnungen 22 im Befestigungssteg eingeführt werden zu können. Weiters zentriert der Zentrierstift 53 die Kuppeleinrichtung bzw. die Halterung 3 und insbesondere die Arme 1, 2 der Schneekette, so daß durch die auftretenden Fliehkräfte sich aufschaukelnde Exzentrizitäten im Betrieb verhindert werden.

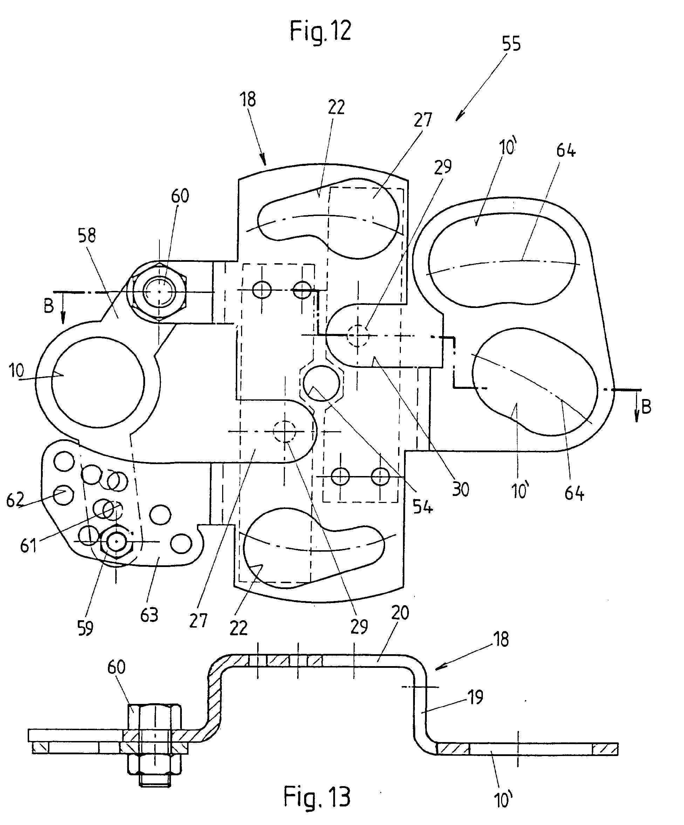

Eine zweite Ausführungsvariante der Erfindung mit einem modifizierten Adapterteil ist in den Figuren 12 und 13 dargestellt. Das Adapterteil wird hier von einer abgekröpften Basisscheibe gebildet, wobei der abgekröpfte Bereich den Befestigungssteg 18 bildet. Der Befestigungssteg 18 umfaßt wiederum einen Brückensteg 20, der parallel zum darunterliegenden Bereich der Felge bzw. zur vertikalen Felgenmittelebene 56 ausgerichtet ist, und Distanzstege 19, über welche der Brückensteg 20 von den Montagelöchern 10 im Adapterteil 55 in Richtung der Längsachse 21 der Felge distanziert wird. Zur Sicherung der Kuppelteile (die bevorzugterweise entsprechend Fig. 8 ausgebildet sein können) in den schlüssellochförmigen Öffnungen 22 sind wiederum, gleich wie bei der ersten Ausführungsvariante der Erfindung, Blattfedern an der Unterseite des Brückensteges an diesem anliegend angebracht. Die Blattfedern 27 und die an ihnen angebrachten Stifte 29, die durch die Ausnehmungen 30 ragen, sind in der Figur 12 nur strichliert angedeutet und in Fig. 13 der Übersichtlichkeit halber weggelassen.

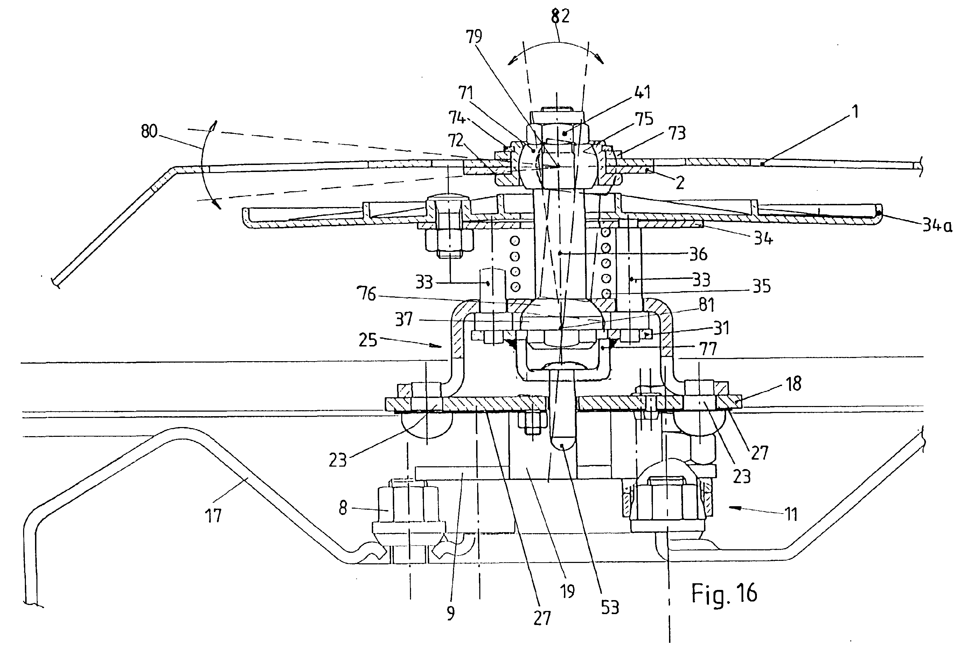

Das in den Figuren 12 und 13 dargestellte Adapterteil ist an die unterschiedlichsten Felgentypen anpaßbar ausgebildet. Es weist hierzu einen Verstellarm 58 (vgl. Fig. 15) auf, in welchem ein Montageloch 10 zur Befestigung des Adapterteils an der Radfelge mittels eines Klemmkopfes angeordnet ist. Bei abgenommener Schraube 59 ist der Verstellarm 58 um die durch die Schraube 60 definierte Achse verschwenkbar. Zur Festlegung des Verstellarms 58 in unterschiedlichen Schwenkstellungen weist der Verstellarm drei nebeneinanderliegende Bohrungen 61 auf, die in unterschiedlichen Schwenkstellungen mit einer der Bohrungen 62 im Abschnitt 63 zur Deckung gebracht werden können. Durch die beiden fluchtenden Bohrungen wird die Schraube 59 gesteckt und mit einer Mutter gesichert. Durch die mehreren nebeneinanderliegenden Bohrungen 61 im Verstellarm 58 ist bei entsprechender Anbringung der Bohrungen 62 im Abschnitt 63 eine feine Abstufung der einstellbaren Winkelpositionen des Verstellarms 58 möglich, wodurch eine genaue Einstellung auf unterschiedliche Lochkreisdurchmesser von verschiedenen Felgenformen ermöglicht wird.

Auf der gegenüberliegenden Seite des Befestigungssteges 18 sind zwei als Langlöcher ausgebildete Montagelöcher 10' vorgesehen. Eines dieser Montagelöcher 10' (dessen gedachte Verbindungslinie mit dem im Verstellarm angeordneten Montageloch 10 durch die Zentrierbohrung 54 geht) ist zur Verwendung des Adapterteils mit einer 4-Lochfelge vorgesehen, während das andere, als Langloch ausgebildete Montageloch 10' bei einer 5-Lochfelge benutzt wird. Die Mittellinien 64 der Langlöcher verlaufen kreisbogenförmig, d. h. die Langlöcher sind radial ausgebildet. Da die Verschwenkung des Montagelochs 10 im Verstellarm 58 ebenfalls entlang eines Kreisbogens erfolgt, wird durch den gezeigten, kreisbogenförmigen Verlauf der als Langlöcher ausgebildeten Montagelöcher 10' bei unterschiedlichen Abständen der Felgenmuttern bzw. Felgenschrauben und damit unterschiedlichen Einstellungen des Verstellarms 58 jeweils eine - zumindest annähernd - zwingend über dem Felgenmittelpunkt liegende Position der Zentrierbohrung 54 erreicht. Unter Verwendung ein und desselben Adapterteils 55 kann somit bei unterschiedlichsten Felgentypen eine zentrierte Montage der Halterung 3 der Schneekette erreicht werden. Da auf dem Markt eine große Zahl von unterschiedlichen Felgentypen in Stahl oder Aluminium angeboten wird, die sich durch die Lochanzahl (Vierloch oder Fünfloch) und den Lochabstand unterscheiden, stellt dies einen wesentlichen Vorteil dieser Ausführungsvariante der Erfindung dar. Durch eine entsprechende Ausgestaltung der auf den beiden Seiten des Befestigungsstegs liegenden Bereiche des Adapterteils läßt sich eine zur Längsachse 21 der Felge in etwa symmetrische Gewichtsverteilung erreichen, so daß Unwuchten minimiert werden.

Obwohl die gezeigte Ausbildung des universell verwendbaren Adapterteils bevorzugt ist, wäre es auch denkbar und möglich, alle Montagelöcher als Langlöcher auszubilden, d. h. anstelle eines in einem Verstellarm 58 vorgesehenen Montagelochs ebenfalls ein Langloch vorzusehen. Die Mittellinien dieser Langlöcher könnten in diesem Fall Geraden sein, die sich in radialer Richtung erstrecken. Der Einsatz eines Verstellarmes 58 hat demgegenüber den Vorteil, daß das in ihm festgelegte Montageloch 10 einen Fixpunkt bei der Montage bildet, wodurch die Betriebssicherheit erhöht wird und die Montage erleichtert wird. Auch die Verwendung von lediglich in Verstellarmen vorgesehenen Montagelöchern wäre denkbar und möglich, wodurch aber die Anpassungsmöglichkeiten an unterschiedliche Felgentypen gegenüber der gezeigten Ausführungsform verringert würden.

Im Unterschied zu den beschriebenen Ausführungsvarianten der Erfindung könnten anstelle der gezeigten, schlüssellochförmigen Öffnungen 22 könnten auch eine andere Anzahl von derartigen Öffnungen oder anders ausgebildete Öffnungen vorgesehen sein. Beispielsweise könnte auch eine einzelne schlüssellochförmige Öffnung vorgesehen sein, deren verengter Bereich zentral oberhalb der Längsachse 21 der Radfelge 17 liegt, wobei ein mit dem zentralen Bolzen 36 verbundener, pilzförmiger oder kugelförmiger Kuppelteit in der beschriebenen Weise durch einen vergrößerten Bereich dieser Öffnung in diese eingeführt werden könnte und anschließend in den Bereich mit der verringerten lichten Weite verschoben werden könnte. Der Befestigungssteg könnte auch in einer anderen als in der gezeigten, brückenartigen Form ausgebildet sein. Grundsätzlich wäre es auch denkbar und möglich, daß die Öffnungen zur Festlegung der Kuppelteile in Bereichen des Befestigungssteges angeordnet sind, welche etwa senkrecht zur Felgenaußenfläche bzw. parallel zur Längsachse 21 der Radfelge liegen.

Durch die federelastische Ausbildung der Arme 1, 2 kann eine Vorspannung der Halterung der Gleitschutzvorrichtung gegen die Radfelge erreicht werden und auch die Balgbewegung des Mantels 44 beim Abrollen des Rades ausgeglichen werden.

Zur Veränderung der Umfangslänge der Kette ist es bekannt, die beiden parallel zueinander verlaufenden Stränge der Ketten über Gummibänder zusammenzuziehen. Diese unterliegen allerdings einem hohen Verschleiß. In Fig. 14 ist demgegenüber ein Steckstift gezeigt, der durch die zwischen zwei Abstandsteilen 67 verlaufenden Teilstränge 66 durchsteckbar ist. An seinem einen Ende weist der Steckstift 65 einen offenen Ring 68 auf. Am anderen Ende ist eine Klemme 69 festlegbar. Zwischen dem Ring 68 bzw. der Klemme 69 und dem jeweiligen Kettenglied sind Gummischeiben 70 angeordnet.

Eine besonders bevorzugte Ausführungsform ist in den Figuren 12 bis 16 dargestellt. Gleiche bzw. zumindest funktionsgleiche Teile sind wiederum mit den gleichen Bezugszeichen versehen. Das Adapterteil kann hier in der in den Figuren 12 und 13 dargestellten Form ausgebildet sein (die Stifte 29 sind der Übersichtlichkeit halber nicht dargestellt). Der zentrale Bolzen 36 der Kuppeleinrichtung steht hier jeweils über kugelgelenkartige Verbindungen einerseits mit den Armen 1, 2, andererseits über das Zwischenstück 25 mit den beiden Kuppelteilen 23 in Verbindung. Zur Ausbildung der kugelgelenkartigen Verbindung zwischen den Armen 1, 2, der Halterung 3 und dem zentralen Bolzen 36 ist ein auf den zentralen Bolzen aufgesteckter Kugelgelenkskopf 71 vorgesehen. Der Bolzen 36 weist hierzu einen Abschnitt mit einem verringerten Durchmesser auf, an dessen freiem Ende ein Gewinde vorgesehen ist. Auf diesen Abschnitt wird der Kugelgelenkskopf 71 aufgeschoben, bis er an der Stufe zum Abschnitt des Bolzens mit dem größeren Durchmesser anliegt. Auf das Gewinde am freien Ende des Abschnitts mit dem verringerten Durchmesser wird die Mutter 41 aufgeschraubt. Auf dem Kugelgelenkskopf 71 ist ein Lagerteil 72 gelagert, welches eine Kugelgelenkpfanne 75 aufweist. Dieses Lagerteil 72 trägt die Arme 1, 2, die zwischen einem nach außen sich erstreckenden, ringförmigen Flansch des Lagerteils 72 und einer auf das Lagerteil 72 geschobenen Scheibe 73 drehbar angeordnet sind, welche durch einen Seegerring 74 gesichert ist. Das Lagerteil 72 mit den Armen 1, 2 ist in alle Richtungen auf dem Kugelgelenkskopf 71 verschwenkbar. Zum Einführen des Kugelkopfes in die Kugelgelenkpfanne 75 weist das Lagerteil 72 an seiner Unterseite zwei seitliche Ausnehmungen 78 der Kugelfläche auf. Der Kugelkopf wird durch diese Ausnehmungen eingeführt, wobei seine Längsachse um 90 ° gegenüber der Längsachse des Lagerteils 72 verkippt ist. Anschließend wird er um 90 ° zurückverkippt, so daß seine Längsachse parallel zur Längsachse des zentralen Bolzens 36 ausgerichtet ist, und in dieser Position auf den Bolzen 36 aufgesteckt und mit der Mutter 41 befestigt.

Im Bereich seines den Armen 1, 2 gegenüberliegenden Endes ist der zentrale Bolzen 36 über eine weitere kugelgelenkartige Verbindung mit dem Zwischenstück 25 verbunden. Dazu weist der Kopf 37 des Bolzens an seiner den Armen 1, 2 zugewandten Rückseite eine kugelschalenförmige Fläche 76 auf, an der der Rand einer zentralen Ausnehmung im scheibenförmigen Abschnitt 32 des Zwischenstücks 25 anliegt. Der Rand dieser Öffnung ist hierbei entsprechend an die kugelschalenförmige Fläche 76 angepaßt, um eine reibungsarme Verschwenkung des Bolzens 36 gegenüber dem Zwischenstück 25 zu ermöglichen.

Der Verschwenkbereich der Arme 1, 2 relativ zum zentralen Bolzen 36 um den Drehpunkt 79 ist in Fig. 16 durch den Pfeil 80 angedeutet. Der Verschwenkbereich des zentralen Bolzens 36 relativ zum Zwischenstück 25 um den Drehpunkt 81 ist durch den Pfeil 82 angedeutet (eine verschwenkte Stellung des zentralen Bolzens 36 ist in Fig. 16 strichliert dargestellt).

An der Druckplatte 31 ist ein Bügel 77 starr befestigt, der einen Zentrierstift 53 trägt. Bei geschlossener Kuppeleinrichtung ragt dieser durch die zentrale Zentrieröffnung 54 im Befestigungssteg 18. Durch diesen Zentrierstift wird wiederum das Schließen der Kuppeleinrichtung erleichtert und weiters wird die Kuppeleinrichtung bzw. die Halterung 3 zentriert, so daß durch die auftretenden Fliehkräfte sich aufschaukelnde Exzentrizitäten im Betrieb verhindert werden.

Um ein sattes Anziehen der Blattfedern 27 zum Befestigungssteg 18 sicherzustellen, können diese Bereiche im Befestigungssteg 18 magnetisiert werden. Es ist dadurch eine Absicherung gegen das Lösen der beiden Kuppelteile 23 gegeben. Zur Erleichterung der Bedienung der Betätigungsscheibe 34 kann an dieser eine Bedienungsscheibe 34a, insbesondere aus Kunststoff, mit gegenüber der Betätigungsscheibe vergrößertem Durchmesser angebracht sein.

### Legende zu den Hinweisziffern:

- 1: Arm
- 2: Arm
- 3: Halterung
- 4: Lasche
- 5: Gleitschutzmittel
- 6: Armfortsatz
- 7: Abstandsteil
- 8: Radmutter
- 9: Basisscheibe
- 10, 10': Montageloch
- 11: Klemmkopf
- 12: Klemmfortsatz
- 13: Klemmring
- 14: Spannmutter
- 15: Gewindestummel
- 16: Oberfläche
- 17: Radfelge
- 18: Befestigungssteg
- 19: Distanzsteg
- 20: Brückensteg
- 21: Längsachse
- 22: Öffnung
- 23, 23': Kuppelteil
- 24, 24': Kopf
- 25: Zwischenstück
- 26: Arm
- 27: Blattfeder
- 28: Rand
- 29: Stift
- 30: Ausnehmung
- 31: Druckplatte
- 32: Abschnitt
- 33: Verbindungsstift
- 34: Betätigungsscheibe
- 34a: Bedienungsscheibe
- 35: Kegeldruckfeder
- 36: Bolzen
- 37: Kopf
- 38: Zentrierabschnitt
- 39: Öffnung
- 40: Schulter
- 41: Mutter
- 42: Lagerscheibe
- 43: Ringnut
- 44: Mantel
- 45: Blindniet
- 46: Längsmittellinie
- 48: Spannhülse
- 49: Außensechskant
- 50: Mutter
- 51: Mutter
- 52: O-Ring
- 53: Zentrierstift
- 54: Zentrierbohrung
- 55: Adapterteil
- 56: Felgenmittelebene
- 58: Verstellarm
- 59: Schraube
- 60: Schraube
- 61: Bohrung
- 62: Bohrung
- 63: Abschnitt
- 64: Mittellinie
- 65: Steckstift
- 66: Teilstrang
- 67: Abstandsteil
- 68: Ring
- 69: Klemme
- 70: Gummischeibe
- 71: Kugelgelenkskopf
- 72: Lagerteil
- 73: Scheibe
- 74: Seegerring
- 75: Kugelpfanne
- 76: Fläche
- 77: Bügel
- 78: Ausnehmung
- 79: Drehpunkt
- 80: Pfeil
- 81: Drehpunkt
- 82: Pfeil

## Patentansprüche

1. Gleitschutzvorrichtung für Luftreifen aufweisende Kraftfahrzeugräder, welche eine im montierten Zustand neben der Radfelge sich befindende Halterung aufweist, die zumindest zwei winkelig zueinander stehende Arme umfaßt, deren freie Enden mit über dem Reifenumfang angeordneten Gleitschutzmitteln in Verbindung stehen und die über eine Kuppeleinrichtung am Rad befestigbar sind, **dadurch gekennzeichnet, daß** die Kuppeleinrichtung ein an mindestens zwei Radmuttern (8) bzw. Radschrauben befestigtes Adapterteil (55) umfaßt, an dem ein Befestigungssteg (18) angeordnet ist, der zumindest eine Öffnung (22) aufweist, die vorzugsweise in einem parallel zur vertikalen Felgenmittelebene (56) liegenden Bereich des Befestigungssteges (18) angeordnet ist, wobei ein mit den Armen (1, 2) der Halterung verbundenes Kuppelteil (23, 23') in die Öffnung (22) im Befestigungssteg (18) einführbar und in dieser festlegbar ist.

2. Gleitschutzvorrichtung nach Anspruch 1, **dadurch gekennzeichnet, daß** das Adapterteil (55) von einer Basisscheibe (9) gebildet wird, die im wesentlichen parallel zum unter der Basisscheibe liegenden Bereich der Oberfläche (16) der Radfelge (17) bzw. zur vertikalen Felgenmittelebene (56) ausgerichtet ist und an der der Befestigungssteg (18) angeordnet ist.

3. Gleitschutzvorrichtung nach Anspruch 2, **dadurch gekennzeichnet, daß** der Befestigungssteg (18) brückenartig ausgebildet ist, wobei er von zwei mit ihren einen Enden in seitlichen Bereichen der Basisscheibe (9) starr mit dieser verbundenen, von der Basisscheibe abstehenden Distanzstegen (19) und einem diese Distanzstege (19) an ihren anderen, von der Basisscheibe (9) abgewandten Enden verbindenden Brückensteg (20) gebildet wird und der Brückensteg (20) mindestens eine Öffnung (22) zum Einführen und Festlegen eines Kuppelteils (23, 23') aufweist.

4. Gleitschutzvorrichtung nach Anspruch 2 oder Anspruch 3, **dadurch gekennzeichnet, daß** die Basisscheibe (9) und der Befestigungssteg (18) von zwei starr miteinander verbundenen Teilen gebildet werden.

5. Gleitschutzvorrichtung nach Anspruch 2 oder Anspruch 3, **dadurch gekennzeichnet, daß** das Adapterteil (55) von einer abgekröpften Basisscheibe gebildet wird, wobei der abgekröpfte Bereich den Befestigungssteg (18) bildet.

6. Gleitschutzvorrichtung nach einem der Ansprüche 1 bis 5, **dadurch gekennzeichnet, daß** das Kuppelteil (23') einen vergrößerten, vorzugsweise pilzförmigen oder kugelförmigen, Kopf aufweist und die Öffnung (22) einen ersten Bereich aufweist, in den der Kopf (24') des Kuppelteils (23'), dessen Durchmesser kleiner ist als die lichte Weite dieses ersten Bereichs der Öffnung (22), einführbar ist, und einen zweiten Bereich aufweist, in den das in die Öffnung (22) eingeführte Kuppelteil (23') verschiebbar ist, wobei der Durchmesser des Kopfes (24') des Kuppelteils (23') größer ist als die lichte Weite des zweiten Bereichs der Öffnung (22) und der Kopf (24') des Kuppelteils (23') den Rand der Öffnung (22) in diesem zweiten Bereich der Öffnung (22) hintergreift.

7. Gleitschutzvorrichtung nach Anspruch 6, **dadurch gekennzeichnet, daß** an der der Radfelge (17) zugewandten Rückseite des Befestigungssteges (18) eine Blattfeder (27) am Befestigungssteg (18) befestigt ist, welche im unbelasteten Zustand am Befestigungssteg anliegt und den ersten Bereich der Öffnung (22) überdeckt, wobei der eine längsseitige Rand (28) der Blattfeder (27) zwischen dem ersten Bereich und dem zweiten Bereich der Öffnung (22) verläuft und das im zweiten Bereich der Öffnung (22) sich befindende Kuppelteil (23') gegen eine unbeabsichtigte Verschiebung in den ersten Bereich der Öffnung (22) sichert.

8. Gleitschutzvorrichtung nach Anspruch 7, **dadurch gekennzeichnet, daß** zum Öffnen der Kuppeleinrichtung an der Blattfeder (27) ein Stift (29) festgelegt ist, der durch eine Ausnehmung (30) im Befestigungssteg (18) tritt und mittels dem die Blattfeder (27) vom Befestigungssteg (18) abhebbar ist, wobei das Kuppelteil (23') in den ersten Bereich der Öffnung (22) verschiebbar ist und aus dem Befestigungssteg (18) herausziehbar ist.

9. Gleitschutzvorrichtung nach einem der Ansprüche 1 bis 8, **dadurch gekennzeichnet, daß** im Befestigungssteg (18) eine oder mehrere, vorzugsweise zwei, symmetrisch zur zentralen Längsachse (21) der Radfelge (17) liegende Öffnungen (22) vorgesehen sind.

10. Gleitschutzvorrichtung nach einem der Ansprüche 1 bis 9, **dadurch gekennzeichnet, daß** das Adapterteil (55) mittels Klemmköpfen (11) an den mindestens zwei Radmuttern (8) oder Radschrauben befestigbar ist.

11. Gleitschutzvorrichtung nach Anspruch 10, **dadurch gekennzeichnet, daß** das Adapterteil (55) Montagelöcher (10, 10') aufweist, über die es an den Radmuttern (8) oder Radschrauben mittels der Klemmköpfe (11) befestigbar ist.

12. Gleitschutzvorrichtung nach einem der Ansprüche 1 bis 11, **dadurch gekennzeichnet, daß** das Adapterteil (55) einen Verstellarm (58) aufweist, in welchem ein Montageloch (10) angeordnet ist, wobei der Verstellarm (58) zur Einstellung des Adapterteils (55) auf unterschiedliche Lochkreisdurchmesser der Radfelgen bzw. Abstände der Radmuttern (8) oder Radschrauben vom Felgenmittelpunkt in einer Ebene parallel zur vertikalen Felgenmittelebene (56) verschwenkbar ist und in unterschiedlichen Schwenkstellungen festlegbar ist.

13. Gleitschutzvorrichtung nach Anspruch 12, **dadurch gekennzeichnet, daß** zur Festlegung des Verstellarms (58) in unterschiedlichen Schwenkstellungen dieser mindestens eine, vorzugsweise mehrere Bohrungen (61) aufweist, die mit einer von mehreren Bohrungen (62) in einem Abschnitt (63) des Adapterteils (55) zur Deckung bringbar sind, wobei der Verstellarm (58) am Abschnitt (63) festschraubbar ist.

14. Gleitschutzvorrichtung nach einem der Ansprüche 1 bis 13, **dadurch gekennzeichnet, daß** zumindest eines der Montagelöcher (10') als Langloch ausgebildet ist.

15. Gleitschutzvorrichtung nach Anspruch 14, **dadurch gekennzeichnet, daß** zwei nebeneinanderliegende, vorzugsweise als Langlöcher ausgebildete Montagelöcher (10') vorgesehen sind, von denen das eine zur Befestigung des Adapterteils (55) an einer 4-Lochfelge und das andere zur Befestigung des Adapterteils an einer 5-Lochfelge vorgesehen ist.

16. Gleitschutzvorrichtung nach Anspruch 12 oder 13 und nach Anspruch 14 oder 15, **dadurch gekennzeichnet, daß** das im Verstellarm (58) vorgesehene Montageloch (10) und das mindestens eine als Langloch ausgebildete Montageloch (10') auf gegenüberliegenden Seiten des Befestigungssteges (18) angeordnet sind.

17. Gleitschutzvorrichtung nach Anspruch 16, **dadurch gekennzeichnet, daß** die Mittellinie des mindestens einen als Langloch ausgebildeten Montagelochs (10') kreisbogenförmig verläuft.

18. Gleitschutzvorrichtung nach einem der Ansprüche 1 bis 17, **dadurch gekennzeichnet, daß** das Adapterteil (55) den Felgenmittelpunkt überspannt.

19. Gleitschutzvorrichtung nach einem der Ansprüche 1 bis 18, **dadurch gekennzeichnet, daß** zur Verkürzung bzw. Verlängerung des Umfangs der Gleitschutzmittel in Form einer Schneekette ein metallischer Steckstift (65) vorgesehen ist, über den der Abstand der beiden nebeneinanderliegenden Teilstränge (66) der Kette verringerbar ist.

20. Gleitschutzvorrichtung nach einem der Ansprüche 1 bis 19, **dadurch gekennzeichnet, daß** die Kuppeleinrichtung einen zentralen Bolzen (36) umfaßt, auf dem die Arme (1, 2) der Halterung (3) der Gleitschutzvorrichtung gelagert sind.

21. Gleitschutzvorrichtung nach Anspruch 20, **dadurch gekennzeichnet, daß** der zentrale Bolzen (36) über kugelgelenkartige Verbindungen einerseits mit den Armen (1, 2), andererseits mit dem mindestens einen Kuppelteil (23) in Verbindung steht.

22. Gleitschutzvorrichtung nach Anspruch 21, **dadurch gekennzeichnet, daß** zur Ausbildung einer kugelgelenkartigen Verbindung zwischen den Armen (1, 2) der Halterung und dem zentralen Bolzen (36) am bzw. auf dem zentralen Bolzen ein Kugelgelenkskopf (71) vorgesehen ist, auf dem ein die Kugelgelenkpfanne (75) aufweisendes Lagerteil (72) gelagert ist, welches die Arme (1, 2) trägt.

23. Gleitschutzvorrichtung nach einem der Ansprüche 21 oder 22, **dadurch gekennzeichnet, daß** der zentrale Bolzen (36) im Bereich seines den Armen (1, 2) gegenüberliegenden Endes über eine kugelgelenkartige Verbindung mit einem Zwischenstück (25) verbunden ist, an welchem das mindestens eine Kuppelteil (23) angeordnet ist, wobei vorzugsweise der zentrale Bolzen (36) an seinem den Armen (1, 2) abgewandten Ende einen Kopf (37) aufweist, an dessen den Armen (1, 2) zugewandten Rückseite eine kugelschalenförmige Fläche (76) vorgesehen ist, und an der kugelschalenförmigen Fläche (76) der Rand einer zentralen Öffnung im Zwischenstück (25) anliegt.

24. Gleitschutzvorrichtung nach Anspruch 23, **dadurch gekennzeichnet, daß** das Zwischenstück einen scheibenförmigen Abschnitt (32) aufweist, der die zentrale Öffnung besitzt, durch welche der zentrale Bolzen (36) tritt.

25. Gleitschutzvorrichtung nach Anspruch 24, **dadurch gekennzeichnet, daß** zwischen parallelen, in Richtung zur Radfelge verlaufenden Armen (26) des Zwischenstücks (25) eine Druckplatte (31) verschiebbar gelagert ist, die an den Enden von durch Öffnungen im scheibenförmigen Abschnitt (32) des Zwischenstücks tretenden Verbindungsstiften (33) angebracht ist, wobei an den gegenüberliegenden Enden der Verbindungsstifte eine Betätigungsscheibe (34) befestigt ist.

26. Gleitschutzvorrichtung nach Anspruch 25, **dadurch gekennzeichnet, daß** die Betätigungsscheibe (34) in drehfester Verbindung mit dem Zwischenstück (25) bzw. den am Zwischenstück angebrachten Kuppelteilen (23) steht.

27. Gleitschutzvorrichtung nach Anspruch 25 oder Anspruch 26, **dadurch gekennzeichnet, daß** zwischen dem scheibenförmigen Abschnitt (32) des Zwischenstücks und der Betätigungsscheibe (34) eine Druckfeder, beispielsweise Kegeldruckfeder (35) angeordnet ist.

28. Gleitschutzvorrichtung nach einem der Ansprüche 25 bis 27, **dadurch gekennzeichnet, daß** die Druckplatte (31) mit einem in Richtung zur Radfelge sich erstreckenden Zentrierstift (53) starr verbunden ist, der bei geschlossener Kuppeleinrichtung durch eine zentrale Zentrierbohrung im Befestigungssteg (18) ragt.
